# EUROPEAN PATENT SPECIFICATION

(11) **EP 4 520 475 B1**
(45) Date of publication and mention of the grant of the patent: **23.09.2026**
(21) Application number: 23830897.7
(22) Date of filing: 23.05.2023
(51) Int. Cl.: B23Q 11/00, B23K 11/30, B23K 11/36

(54) **CHIP RECOVERY SYSTEM**
CHIP-RÜCKGEWINNUNGSSYSTEM
SYSTÈME DE RÉCUPÉRATION DE COPEAUX

(30) Priority: 29.06.2022 JP 2022104346
(43) Date of publication of application: 12.03.2025
(73) Proprietor: Kyokutoh Co., Ltd., Orido-cho, Nissin-shi Aichi 4700115 (JP)
(72) Inventor: KUSANO Hirokazu, Nissin-shi, Aichi 470-0115 (JP)
(74) Representative: Winter, Brandl - Partnerschaft mbB
(86) International application number: PCT/JP2023/019159
(87) International publication number: WO 2024/004445

(56) References cited:
- EP-A1- 4 015 133
- WO-A1-2015/060154
- DE-A1- 19 827 173
- DE-U1- 20 211 851
- JP-A- 2009 028 897
- JP-A- 2013 049 123
- JP-A- 2021 133 397
- JP-A- 2022 015 780
- JP-A- 2022 185 910
- US-B2- 7 425 109

## Description

### BACKGROUND OF INVENTION

### Field of the Invention

The present invention relates to a chip collection system that collects chips produced when the distal end of an electrode tip for spot welding is cut with a tip dresser.

### Background Art

A known welding gun used for spot welding includes a shank having a distal end to which a copper electrode tip is attached in a detachable manner. The electrode tip includes a distal end portion that wears or deteriorates with, for example, an oxide film adhering to the distal end portion after welding performed a predetermined number of times. The electrode tip is thus periodically cut using a tip dresser to remove, for example, the oxide film.

Chips produced when the distal end of the electrode tip is cut with the tip dresser may accumulate on a drive in the device, and may thus increase a load on the drive, possibly causing a failure of the device. Chips are thus to be collected immediately after being produced.

In response to this, for example, the chip collection system described in Korean Registered Patent No. 10-1696263 includes a suction unit that can suck chips. The suction unit includes a duct having one end with a chip suction port and the other end connected to a chip collection case. The duct has, in its intermediate portion, an air inlet port that allows compressed air to be introduced into the duct. Compressed air is introduced through the air inlet port to a space closer to the chip collection case inside the duct to create a negative pressure in a space closer to the chip suction port inside the duct. This generates airflow flowing toward the chip collection case in the duct. Chips falling from a tip dresser are thus sucked into the duct through the chip suction port with air and collected in the chip collection case.

DE 202 11 851 U1 discloses a chip extraction unit comprising a basic unit, a chip bag with insert, a chip discharge hose leading to the machining head, and cables and plugs for electrical supply, wherein a suction motor is arranged in the basic unit above a hose connection, the basic unit has a chip bag holder and is closed off at the top by a lid provided with openings. EP 4 015 133 A1 relates to an electrode cap treatment device comprising a docking station which can be arranged in a fixed position, with a first docking device, an electrode cap treatment unit with a second docking device and a first locking mechanism. DE 198 27 173 A1 discloses a dust suction system for a power hand tool has a dust collecting cowl positioned near the working tool and with a suction chamber to collect the grit and dust. US 7 425 109 B2 discloses a suction device for a power tool with at least one dust container and at least one suction head to be placed on a work piece.

### SUMMARY OF INVENTION

### TECHNICAL PROBLEM

Nowadays, to improve the work environment at a factory by greatly reducing noise and achieving a quiet and comfortable workplace, the use of a compressor may be avoided, whereas a compressor is otherwise typically installed at a factory to supply compressed air. For the suction unit used for a tip dresser described in Korean Registered Patent No. 10-1696263 as well, the technique for collecting chips quietly without compressed air from a compressor installed at a factory is awaited.

In response to the above, one or more aspects of the present invention are directed to a chip collection system that reduces noise generated when in use without reducing its chip collection performance, thus improving the work environment.

### SOLUTION TO PROBLEM

In response to the above, the chip collection system according to one or more aspects of the present invention uses a drive source specifically designed to activate a component that generates a suction force. The invention is set out in appended set of claims
More specifically, the chip collection system according to one or more aspects of the present invention includes a tip dresser that cuts a distal end of an electrode tip for spot welding, and a suction unit that sucks and collects chips produced when the distal end of the electrode tip is cut with the tip dresser. The chip collection system has the structure described below.

In a chip collection system according to the present invention, the suction unit includes an electric motor being rotatable, an impeller rotatable by the electric motor to generate a suction force, and a chip collection case into which the chips are collectable. The suction unit collects chips moving with air introduced from a chip inlet port sucked in response to rotation of the impeller into the chip collection case.

The chip collection system according to the present invention further includes a cover including an upper wall being disk-shaped and having a centerline extending vertically and a side wall being cylindrical and extending downward from an outer circumferential edge of the upper wall. The cover is open downward. The cover covers the electric motor and the impeller.

In the chip collection system according to the present invention, the impeller is a centrifugal impeller with a rotation center extending in a vertical direction and including a suction port facing downward. The electric motor is located above the impeller.

In the chip collection system according to the present invention, the cover has a chip inlet port through which air including the chips is introduced into an inner space of the cover from outside. The cover contains, in the inner space, a partition dividing the inner space into an upper area accommodating the electric motor and the impeller and a lower area corresponding to the chip inlet port. The partition has a connection hole corresponding to the suction port at a center of the partition. An air filter is located below the partition. The air filter is a vertically elongated bottomed cylinder having an air outlet connecting with the connection hole. The air filter has, in an outer circumferential surface of the air filter, a plurality of air inlets through which air flows into an inner space of the air filter from outside. The chip collection case is a bottomed cylinder having an attachment opening portion being open upward and attachable to the cover to close a lower end opening of the cover.

A chip collection system according to a second aspect of the present invention is the chip collection system according to the present invention in which the air filter contains a porous member in the inner space.

A chip collection system according to a third aspect is the chip collection system according to the present invention or the second aspect of the present invention further including an attachment bracket with which the suction unit is attachable to an attachment body. The cover includes a fitting wall having an outer circumferential surface having a regular polygonal shape about a centerline of the cover when viewed in a direction along the centerline. The attachment bracket has a fitting hole to receive the fitting wall. The fitting hole has a same regular polygonal shape as the fitting wall.

A chip collection system according to a fourth aspect is the chip collection system according to any one of the present invention, second and third aspects of the present invention in which the cover has, in a portion of an outer circumferential surface of the cover corresponding to the centrifugal impeller, a plurality of outlets through which air expelled radially outward from the centrifugal impeller is discharged out of the cover. The plurality of outlets are arranged along a circumference of the cover.

A chip collection system according to a fifth aspect of the present invention is the chip collection system according to the fourth aspect of the present invention in which the cover has, in an area of the outer circumferential surface of the cover excluding the plurality of outlets, a plurality of recessed grooves arranged adj acent to one another and extending in a same direction and a plurality of ridges arranged adjacent to one another and extending in a same direction. Each of the plurality of ridges is located between adjacent recessed grooves of the plurality of recessed grooves.

A chip collection system according to a sixth aspect of the present invention is the chip collection system according to the fifth aspect of the present invention in which the cover includes a pair of split portions formed from a resin. The pair of split portions are portions of the cover halved at the centerline and having a same shape. The cover is an assembly of the pair of split portions including opening end edges abutting against each other. The plurality of recessed grooves are recessed in a direction in which the pair of split portions are arranged. The plurality of ridges protrude in the direction in which the pair of split portions are arranged. The plurality of outlets extend through the cover in the direction in which the pair of split portions are arranged.

A chip collection system according to a seventh aspect of the present invention is the chip collection system according to the present invention in which the chip collection case is a single member formed from a transparent resin material.

A chip collection system according to an eighth aspect is the chip collection system according to the present invention or the second aspect of the present invention in which the chip collection case has, on an outer circumferential surface of the chip collection case, a plurality of annular grooves arranged in a direction parallel to a cylinder centerline. Each of the plurality of annular grooves is recessed in an arc in a cross section taken along the cylinder centerline and extends along a circumference of the chip collection case about the cylinder centerline.

### ADVANTAGEOUS EFFECTS

In the present invention, the impeller that generates a suction force to collect chips is rotated by a driving force of the electric motor. Thus, a compressor typically installed at a factory as described in Patent Literature 1 is not to be activated in collecting chips. Thus, the chip collection system greatly reduces noise generated when in use without reducing its chip collection performance, thus improving the work environment.

In the present invention, for example, when cooling water for cooling the electrode tip leaks from, for example, a welding gun and falls from above the suction unit, the structure prevents the cooling water from directly accumulating on the electric motor and the impeller.

In the present invention, the centrifugal impeller is located below the electric motor. Thus, the electric motor is less likely to be reached by, for example, the cooling water from below. The chip collection system is thus highly waterproof.

In the present invention, in response to the centrifugal impeller being rotated to generate a suction force as the electric motor is driven to rotate, air is introduced into the chip collection case through the chip inlet port. Then, through the air inlets and the air outlet, the air passes through the air filter while moving upward, and reaches the centrifugal impeller through the connection hole. The chips are introduced through the chip inlet port together with the air in this airflow. When the chips are to pass through the air filter, the chips are blocked by the air filter and remain in the chip collection case. An operator can easily discard the chips remaining in the chip collection case after detaching the chip collection case from the cover. In this manner, the chips can be collected and discarded efficiently.

In the second aspect, the porous member in the inner space of the air filter absorbs sound generated when air passes through the air filter. This further reduces noise generated when the chip collection system is in use.

In the third aspect, the fitting wall can be fitted into the fitting hole with the cover rotated about the centerline of the cover by a predetermined angle relative to the attachment bracket. The position of the chip inlet port with respect to the attachment body can thus be changed based on the surroundings of the suction unit.

In the fourth aspect, areas through which the discharged air expelled radially outward from the centrifugal impeller passes through the cover are increased, and are arranged in a distributed manner in the circumferential direction of the cover. This structure reduces the momentum of the discharged air passing through the cover, causing sound produced when the discharged air passes through the cover to be less noisy. This further reduces noise generated when the chip collection system is in use.

In the fifth aspect, the cover is lighter by the weight of the volume corresponding to the spaces defining the recessed grooves, and has a greater section modulus at the area for each ridge and is thus more rigid. The chip collection system is thus highly rigid and light.

In the sixth aspect, the split portions can each be formed from a resin material as a single member using a mold with its opening direction set to the direction in which the split portions are arranged. This avoids undercuts and allows molding of the split portions each with a complex profile having the multiple recessed grooves, the multiple ridges, and the multiple outlets with a single mold. Fewer molds are thus used in molding, reducing the cost for manufacturing the suction unit.

In the seventh aspect, the operator can visually check the inside of the chip collection case from outside. The operator can thus check the collected amount of the chips to discard them. This increases the work efficiency.

In the eighth aspect, the chip collection case has a greater section modulus at a cross section taken along the cylinder centerline and is thus more rigid with a force in a direction toward the cylinder centerline. Thus, when a large suction force is generated in a direction toward the air filter aligned with the cylinder centerline of the chip collection case during the operation of the chip collection system, the chip collection case is prevented from deforming and reducing an area to collect chips.

### BRIEF DESCRIPTION OF THE DRAWINGS

FIG. 1 is a schematic perspective view of a chip collection system according to an embodiment of the present invention.
FIG. 2 is a perspective view of a unit body of a suction unit in the embodiment of the present invention.
FIG. 3 is an exploded perspective view of the upper half of the unit body of the suction unit in the embodiment of the present invention.
FIG. 4 is an exploded perspective view of the lower half of the unit body of the suction unit in the embodiment of the present invention.
FIG. 5 is a sectional view taken along line V-V in FIG. 2.
FIG. 6 is a sectional view taken along line VI-VI in FIG. 5.

### DETAILED DESCRIPTION

An embodiment of the present invention will now be described in detail with reference to the drawings. The embodiment described below is a mere example.

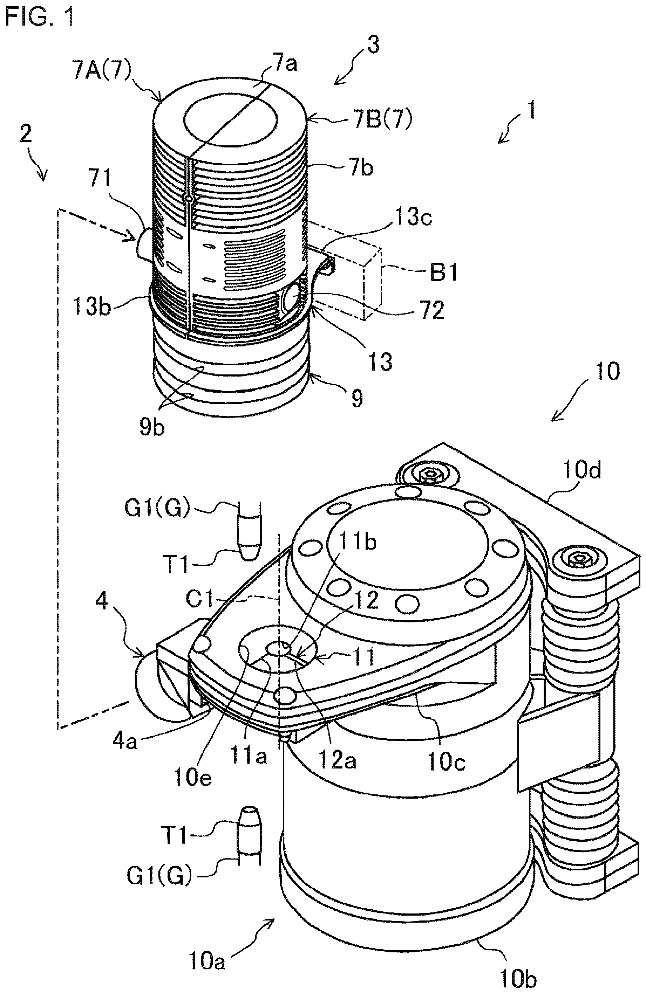

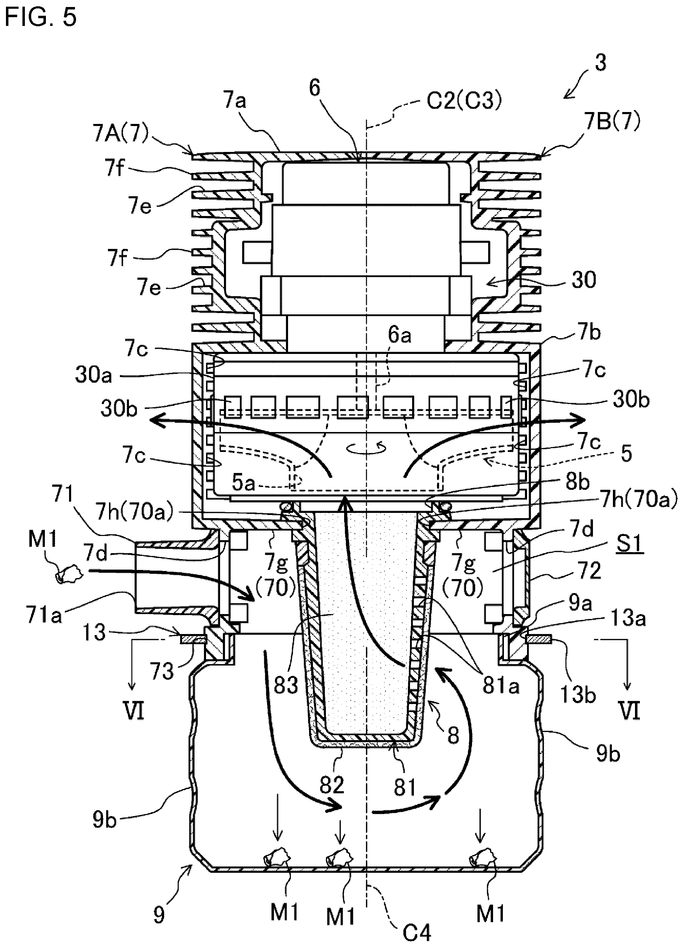

FIG. 1 shows a chip collection system 1 according to the embodiment of the present invention. The chip collection system 1 includes a tip dresser 10 and a suction unit 2. The tip dresser 10 can cut the distal ends of a pair of electrode tips T1 attached to a welding gun G for spot welding. The suction unit 2 sucks and collects chips M1 (refer to FIG. 5) produced when the distal ends of the electrode tips T1 are cut with the tip dresser 10.

The tip dresser 10 includes a body case 10a that is substantially L-shaped when viewed laterally. The body case 10a includes a motor compartment 10b that is a bottomed cylinder with its centerline extending vertically and a holder compartment 10c extending laterally from an upper portion of the motor compartment 10b in a substantially horizontal direction. The holder compartment 10c has substantially a droplet shape when viewed from above.

A shock absorber 10d that absorbs shock on the body case 10a is attached to the side surface of the motor compartment 10b adjacent to a basal end of the holder compartment 10c.

The holder compartment 10c is a plate with a thickness. The holder compartment 10c has a holder support hole 10e in the middle of its extending portion. The holder support hole 10e is open vertically.

The holder support hole 10e in the holder compartment 10c receives a rotary holder 11 with a rotation axis C1 extending in the vertical direction. The rotary holder 11 is rotated about the rotation axis C1 by a drive motor (not shown) accommodated in the motor compartment 10b.

The rotary holder 11 is substantially C-shaped when viewed from above. The rotary holder 11 has a cutout 11a that is wider in the circumferential direction about the rotation axis C1 at radially more outward positions from the rotation axis C1. The cutout 11a is open outward and vertically.

The rotary holder 11 has, on its upper and lower surfaces, a pair of curved recesses 11b having a diameter gradually decreasing toward the center of the rotary holder 11. The curved recesses 11b are symmetrical to each other in the direction of the rotation axis C1. FIG. 1 shows an upper curved recess 11b of the pair of curved recesses 11b alone.

The curved recesses 11b have a shape corresponding to the curved shape of the distal ends of the electrode tips T1. With the central axis of the electrode tips T1 aligned with the rotation axis C1, the curved recesses 11b can receive the distal ends of the electrode tips T1.

The cutout 11a has one inner surface extending outward from the rotation axis C1 to which a cutter 12 for cutting the distal ends of the electrode tips T1 is attached.

The cutter 12 includes a cutting blade 12a extending in a direction intersecting with the rotation axis C1. The cutting blade 12a gradually curves to correspond to the curved recesses 11b.

With the rotary holder 11 being rotated, one of the pair of electrode tips T1 facing each other is inserted into the upper curved recess 11b, and the other electrode tip is inserted into a lower curved recess (not shown). This causes the cutting blade 12a on the cutter 12 to cut the distal end of each electrode tip T1.

The suction unit 2 includes a unit body 3 that is substantially a column with its centerline extending in the vertical direction and a duct hose 4 that guides the chips M1 produced in the tip dresser 10 to the unit body 3.

The duct hose 4 has one end with a chip suction port 4a and the other end connected to the unit body 3. The chip suction port 4a faces a chip receiving area below the rotary holder 11 in the tip dresser 10.

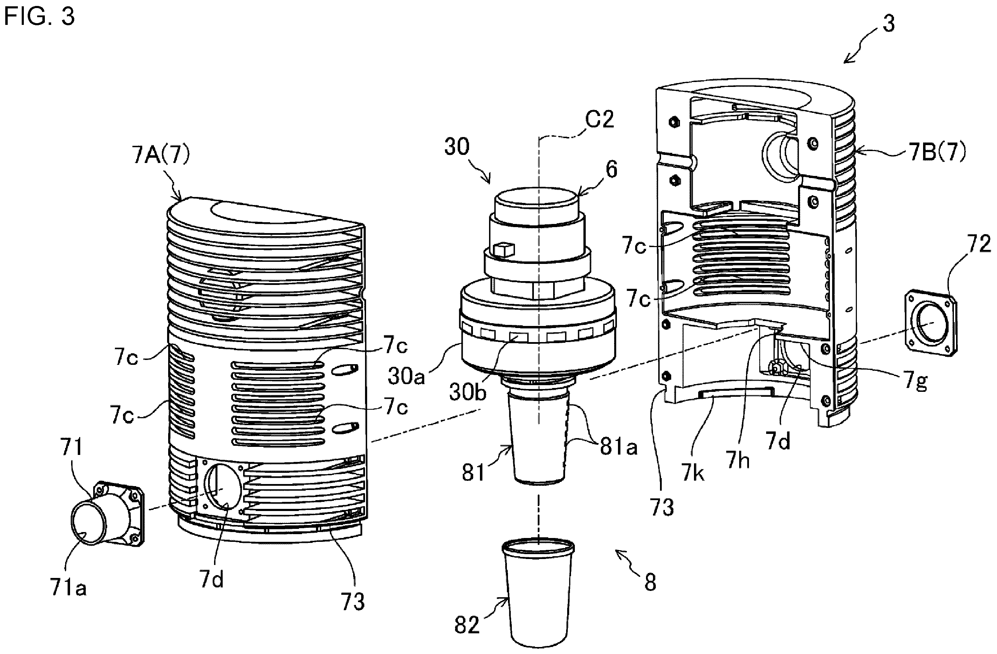

As shown in FIG. 3, the unit body 3 includes a blower unit 30 that is substantially T-shaped when viewed laterally and a resin cover 7 covering the blower unit 30.

As shown in FIG. 5, the blower unit 30 includes a substantially disk-shaped centrifugal impeller 5 with a rotation center C2 extending in the vertical direction and including a suction port 5a facing downward, and an electric motor 6 located above the centrifugal impeller 5 and including a rotational shaft 6a extending downward.

The centrifugal impeller 5 is accommodated in a disk-shaped blower cover 30a with a thickness. The blower cover 30a is open downward and has multiple air vents 30b in its outer circumferential surface.

The centrifugal impeller 5 rotates about the rotation center C2 in response to the electric motor 6 rotating, causing air sucked upward through the suction port 5a to move radially outward and be discharged out of the blower cover 30a through the air vents 30b. The centrifugal impeller 5 thus generates a suction force.

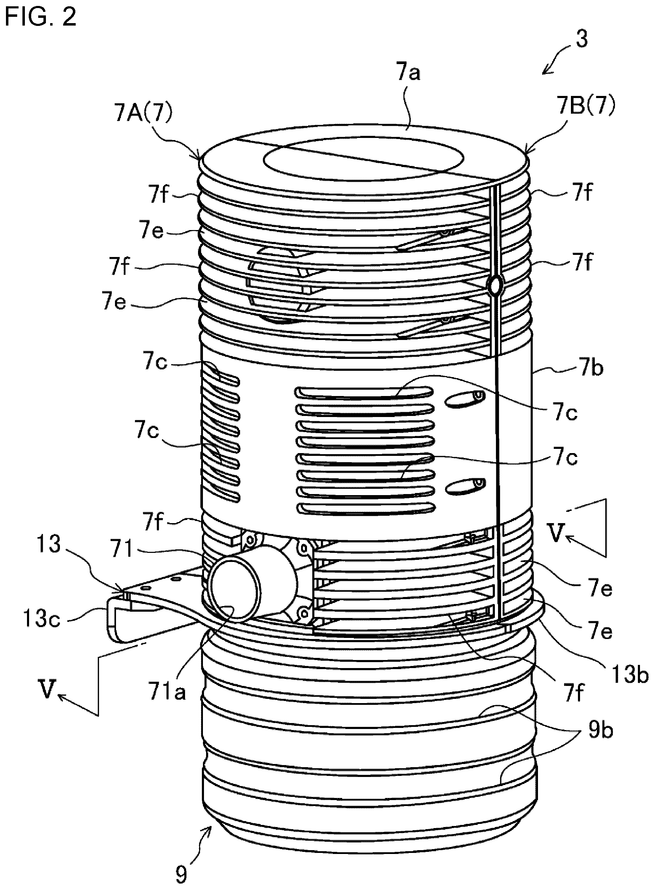

As shown in FIG. 2, the cover 7 includes a disk-shaped upper wall 7a with a centerline C3 extending vertically and a cylindrical side wall 7b extending downward from the outer circumferential edge of the upper wall 7a. The cover 7 is open downward.

As shown in FIG. 3, the cover 7 includes, on the circumferential edge of the opening, multiple upper bayonet tabs 7k arranged at predetermined intervals about the centerline C3.

FIG. 3 shows one upper bayonet tab 7k alone.

As shown in FIG. 2, the cover 7 includes a first split portion 7A and a second split portion 7B each having a shape obtained by halving the cover 7 at the centerline C3.

The first split portion 7A has, in its intermediate area, multiple outlets 7c arranged along the centerline C3. The outlets 7c are slits extending through the first split portion 7A in a direction in which the first split portion 7A and the second split portion 7B are arranged and elongated circumferentially about the centerline C3.

The first split portion 7A includes an opening portion 7d in the middle of its lower area as shown in FIG. 3.

The first split portion 7A has, in areas of its outer surface excluding the outlets 7c, multiple recessed grooves 7e arranged adjacent to one another. The recessed grooves 7e are recessed in the direction in which the first split portion 7A and the second split portion 7B are arranged and extend in the same direction. The recessed grooves 7e extend in a direction intersecting with the centerline C3 and along a plane by which the cover 7 is split.

The first split portion 7A has, between the recessed grooves 7e on its outer surface, multiple ridges 7f protruding in the direction in which the first split portion 7A and the second split portion 7B are arranged and extending in the same direction as the recessed grooves 7e.

As shown in FIG. 5, the first split portion 7A includes, on a portion of its inner surface close to the bottom, a protruding plate 7g protruding toward the second split portion 7B. The protruding plate 7g divides the inner space of the first split portion 7A into an upper area and a lower area. The protruding plate 7g has a cutout recess 7h that is open at a protruding end of the protruding plate 7g.

The second split portion 7B has the same structure as the first split portion 7A described above. The same reference numerals denote the same components as those of the first split portion 7A. Such components will not be described in detail.

The first split portion 7A and the second split portion 7B are each a single member formed from a resin material using a single mold with its opening direction set to the direction in which the first split portion 7A and the second split portion 7B are arranged.

As shown in FIG. 3, the cover 7 is assembled by abutting the edges of the opening ends of the first split portion 7A and the second split portion 7B, with the blower unit 30 placed between the first split portion 7A and the second split portion 7B. In the assembled cover 7, as shown in FIG. 5, the protruding plate 7g in the first split portion 7A and the protruding plate 7g in the second split portion 7B define a partition 70 that divides an internal space S1 of the cover 7 into an upper area accommodating the blower unit 30 and a lower area corresponding to the opening portion 7d, and the cutout recess 7h in the first split portion 7A and the cutout recess 7h in the second split portion 7B define a connection hole 70a corresponding to the suction port 5a in the centrifugal impeller 5.

In the assembled cover 7, the outlets 7c are in a portion of the outer circumferential surface of the cover 7 corresponding to the centrifugal impeller 5. In other words, the outlets 7c are arranged along the circumference of the cover 7 and allow air expelled radially outward from the centrifugal impeller 5 to be discharged out of the cover 7.

A cylindrical member 71 is fitted to the opening portion 7d in the first split portion 7A of the cover 7. The cylindrical member 71 has an inner space that is a chip inlet port 71a through which air including the chips M1 is introduced into the inner space of the cover 7 from outside the cover 7.

In contrast, the opening portion 7d in the second split portion 7B of the cover 7 has an end adjacent to the outer circumferential surface of the cover 7 closed by a lid 72 that is a rectangular plate.

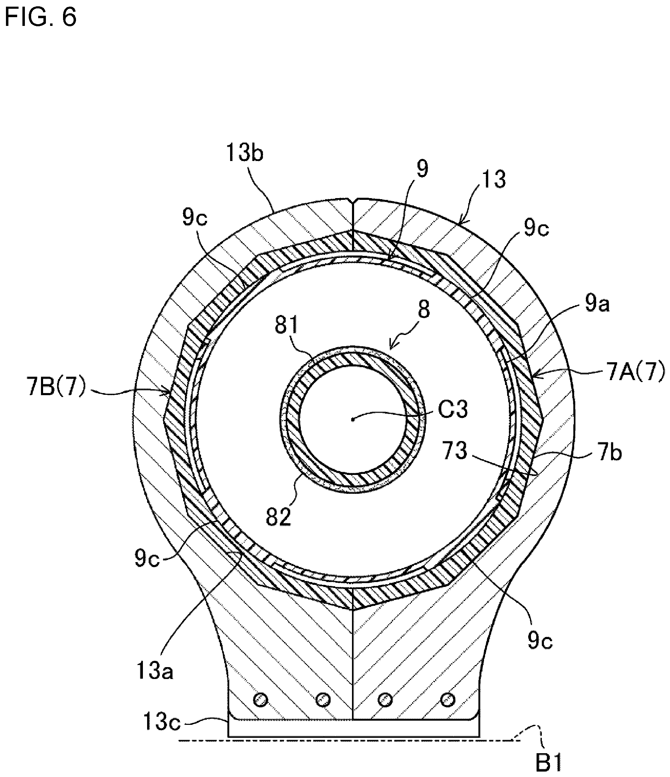

The cover 7 includes a fitting wall 73 on a portion of its outer circumferential surface that is close to its lower end and adjacent to the upper bayonet tabs 7k. The fitting wall 73 is located inward toward the centerline C3 and is continuous about the centerline C3. As shown in FIG. 6, the fitting wall 73 has an outer circumferential surface having a regular dodecagonal shape about the centerline C3 when viewed in a direction along the centerline C3.

An air filter 8 is located below the partition 70 as shown in FIG. 5. The air filter 8 is a vertically elongated bottomed cylinder and has an air outlet 8b connecting with the connection hole 70a.

The air filter 8 is tapered to have the diameter of its outer circumferential surface gradually decreasing downward. The air filter 8 includes a filter body 81 that is a single member formed from a resin material and a filter 82 of nonwoven fabric covering the filter body 81 from above.

The filter body 81 has, in a portion of its outer circumferential surface that is farther from the cylindrical member 71, multiple air inlets 81a that are slits elongated circumferentially about the centerline C3. The air inlets 81a are arranged vertically. Air flows into the inner space of the air filter 8 from outside the air filter 8 through the air inlets 81a.

The filter body 81 has an inner space filled with a porous member 83. The porous member 83 may be a member with many pores and high sound absorbency such as sponge or resin foam.

As shown in FIG. 1, the cover 7 has its lower portion supported by an attachment bracket 13 for attaching the suction unit 2 to an attachment body B1, such as a support frame.

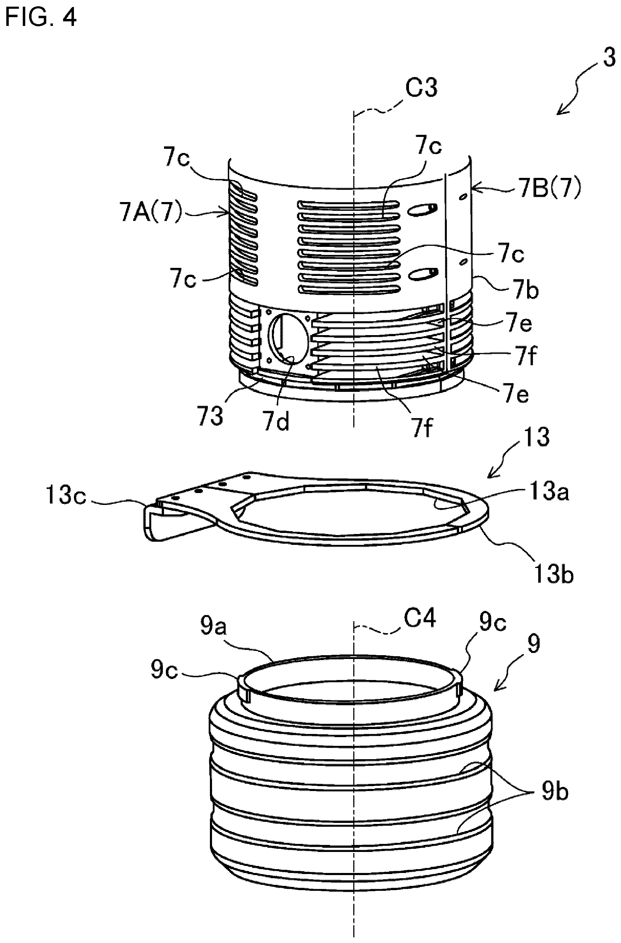

The attachment bracket 13 includes a bracket body 13b and an attachment portion 13c as shown in FIG. 4. The bracket body 13b has an internal fitting hole 13a and is annular when viewed from above. The attachment portion 13c continuously extends outward from a portion of the outer circumferential edge of the bracket body 13b and has a substantially L-shaped longitudinal cross section. The fitting hole 13a receives the fitting wall 73 and has the same regular dodecagonal shape as the fitting wall 73.

The attachment bracket 13 can be halved at the middle of the attachment portion 13c. The attachment bracket 13 is assembled by laterally holding the fitting wall 73 of the cover 7 with the resultant halves. This causes the fitting wall 73 to be fitted to the fitting hole 13a.

A chip collection case 9 is located below the cover 7. The chip collection case 9 is a bottomed cylinder including an attachment opening portion 9a that is open upward. The chip collection case 9 is a single member formed from a transparent resin material.

The chip collection case 9 has, on its outer circumferential surface, multiple annular grooves 9b arranged in a direction parallel to a cylinder centerline C4. As shown in FIG. 5, the annular grooves 9b are recessed toward the cylinder centerline C4 in an arc in a cross section taken along the cylinder centerline C4 and extend along the circumference of the chip collection case 9 about the cylinder centerline C4.

As shown in FIG. 4, a pair of lower bayonet tabs 9c are arranged along the attachment opening portion 9a of the chip collection case 9 at predetermined intervals about the cylinder centerline C4.

The lower bayonet tabs 9c are engaged with the upper bayonet tabs 7k in the cover 7. This allows the chip collection case 9 to be attached to the cover 7 with the opening in the lower end of the cover 7 being closed.

The operation of the suction unit 2 for collecting chips will now be described.

When the tip dresser 10 starts cutting the electrode tips T1 attached to shanks G1 included in the welding gun G for spot welding, the suction unit 2 is turned on, and the electric motor 6 rotates as shown in FIG. 5.

In response to the rotational shaft 6a rotating as the electric motor 6 rotates, the centrifugal impeller 5 rotates. In the centrifugal impeller 5, air sucked upward through the suction port 5a changes its direction and moves outward in the radial direction of the centrifugal impeller 5, passes through the air vents 30b in the blower cover 30a, and is then discharged through the outlets 7c in the cover 7. Through this series of movement, a suction force is generated in the suction unit 2.

In response to a suction force being generated in the suction unit 2, air is sucked through the chip suction port 4a of the duct hose 4 and introduced into the chip collection case 9 through the chip inlet port 71a. Then, through the air inlets 81a and the air outlet 8b, the air passes through the air filter 8 while moving upward, and reaches the centrifugal impeller 5 through the connection hole 70a. The chips M1 are sucked through the chip suction port 4a together with the air in this airflow and introduced into the suction unit 2 through the chip inlet port 71a. When the chips M1 are to pass through the air filter 8, the chips M1 are blocked by the air filter 8 and remain in the chip collection case 9. An operator can thus easily discard the chips M1 remaining in the chip collection case 9 after detaching the chip collection case 9 from the cover 7. In this manner, the chip collection system 1 according to the embodiment of the present invention allows the chips M1 to be collected and discarded efficiently.

In the embodiment of the present invention, as described above, the centrifugal impeller 5 that generates a suction force to collect the chips M1 is rotated by a driving force of the electric motor 6. This structure eliminates, in collecting the chips M1, activation of a compressor typically installed at a factory, unlike in Patent literature 1. This greatly reduces noise generated when the chip collection system 1 is in use without reducing the chip collection performance, thus improving the work environment.

The cover 7 covers the centrifugal impeller 5 and the electric motor 6. Thus, for example, when cooling water for cooling the electrode tips T1 leaks from, for example, the welding gun G and falls from above the suction unit 2, this structure prevents the cooling water from directly accumulating on the electric motor 6 and the centrifugal impeller 5.

The centrifugal impeller 5 is located below the electric motor 6. Thus, the electric motor 6 is less likely to be reached by, for example, the cooling water from below. The chip collection system 1 is thus highly waterproof.

The air filter 8 has the inner space filled with the porous member 83. The porous member 83 in the air filter 8 thus absorbs sound generated when air passes through the air filter 8. This further reduces noise generated when the chip collection system 1 is in use.

The fitting wall 73 of the cover 7 and the fitting hole 13a in the attachment bracket 13 to which the fitting wall 73 is fitted each have a regular dodecagonal shape, and the shapes of the fitting wall 73 and the fitting hole 13a correspond to each other. The fitting wall 73 can thus be fitted into the fitting hole 13a with the cover 7 rotated about the centerline C3 of the cover 7 by a predetermined angle relative to the attachment bracket 13. The position of the chip inlet port 71a with respect to the attachment body B1 can thus be changed based on the surroundings of the suction unit 2.

The cover 7 has, in the portion of the cover 7 corresponding to the centrifugal impeller 5, many outlets 7c arranged along a circumference of the cover 7 in the circumferential direction of the cover 7. Thus, areas through which the discharged air expelled radially outward from the centrifugal impeller 5 passes through the cover 7 are increased, and are arranged in a distributed manner in the circumferential direction of the cover 7. This structure reduces the momentum of the discharged air passing through the cover 7, causing sound produced when the discharged air passes through the cover 7 to be less noisy. This further reduces noise generated when the chip collection system 1 is in use.

The cover 7 has the multiple recessed grooves 7e and the multiple ridges 7f. The cover 7 is thus lighter by the weight of the volume corresponding to the spaces defining the recessed grooves 7e, and has a greater section modulus at the area for each ridge 7f and is thus more rigid. The chip collection system 1 is thus highly rigid and light.

The first split portion 7A and the second split portion 7B can each be formed from a resin material as a single member using a mold with its opening direction set to the direction in which the first split portion 7A and the second split portion 7B are arranged. This avoids undercuts and allows the first split portion 7A and the second split portion 7B with a complex profile having the multiple recessed grooves 7e, the multiple ridges 7f, and the multiple outlets 7c to be molded with a single mold. Fewer molds are thus used in molding, reducing the cost for manufacturing the suction unit 2.

The chip collection case 9 is a single member formed from a transparent resin material. This allows the operator to visually check the inside of the chip collection case 9 from outside. The operator can thus check the collected amount of the chips M1 to discard them. This increases the work efficiency.

The chip collection case 9 has, on its outer circumferential surface, the multiple annular grooves 9b arranged along the cylinder centerline C4. The chip collection case 9 thus has a greater section modulus at a cross section taken along the cylinder centerline C4 and is more rigid with a force in a direction toward the cylinder centerline C4 of the chip collection case 9. Thus, when a large suction force is generated in a direction toward the air filter 8 aligned with the cylinder centerline C4 of the chip collection case 9 during the operation of the chip collection system 1, the chip collection case 9 is prevented from deforming and reducing an area to collect the chips M1.

Although the centrifugal impeller 5 is used to generate a suction force in the above embodiment of the present invention, another type of impeller such as an axial flow impeller or a mixed flow impeller may be used.

Although the fitting hole 13a in the attachment bracket 13 and the fitting wall 73 of the cover 7, which are fitted to each other, have a regular dodecagonal shape in the above embodiment of the present invention, the fitting hole 13a and the fitting wall 73 may have another regular polygonal shape, rather than a regular dodecagonal shape.

Although the filter body 81 has the inner space filled with the porous member 83 in the above embodiment of the present invention, the filter body 81 may include the porous member 83 inside the filter body 81. For example, the porous member 83 may be cylindrical and cover the inner surface of the filter body 81.

### INDUSTRIAL APPLICABILITY

One or more embodiments of the present invention may be implemented as a chip collection system that collects chips produced when the distal end of an electrode tip for spot welding is cut with a tip dresser.

### REFERENCE SIGNS LIST

- 1: chip collection system
- 2: suction unit
- 5: centrifugal impeller
- 6: electric motor
- 7: cover
- 7A: first split portion
- 7B: second split portion
- 7a: upper wall
- 7b: side wall
- 7c: outlet
- 7e: recessed groove
- 7f: ridge
- 8: air filter
- 8b: air outlet
- 9: chip collection case
- 9a: attachment opening portion
- 9b: annular groove
- 10: tip dresser
- 13: attachment bracket
- 13a: fitting hole
- 70: partition
- 70a: connection hole
- 71a: chip inlet port
- 73: fitting wall
- 81a: air inlet
- 83: porous member
- B1: attachment body
- M1: chip
- T1: electrode tip

## Claims

1. A chip collection system, comprising:
a tip dresser (10) configured to cut a distal end of an electrode tip (T1) for spot welding; and
a suction unit (2) configured to suck and collect chips (M1) produced when the distal end of the electrode tip (T1) is cut with the tip dresser (10), the suction unit (2) including an electric motor (6) being rotatable, an impeller (5) rotatable by the electric motor (6) to generate a suction force, and a chip collection case (9) into which the chips (M1) are collectable, and a cover (7) including an upper wall (7a) being disk-shaped and having a centerline (C3) extending vertically and a side wall (7b) being cylindrical and extending downward from an outer circumferential edge of the upper wall (7a), the cover (7) being open downward and covering the electric motor (6) and the impeller (5), wherein
the impeller (5) is a centrifugal impeller with a rotation center (C2) extending in a vertical direction and including a suction port (5a) facing downward, and
the electric motor (6) is located above the impeller (5),
the cover (7) has a chip inlet port (71a) through which air including the chips (M1) is introduced into an inner space of the cover (7) from outside,
the cover (7) contains, in the inner space, a partition (70) dividing the inner space (S1) into an upper area accommodating the electric motor (6) and the impeller (5) and a lower area corresponding to the chip inlet port (71a), and the partition (70) has a connection hole (70a) corresponding to the suction port (5a) at a center of the partition (70),
an air filter (8) is located below the partition (70), the air filter (8) is a vertically elongated bottomed cylinder having an air outlet (8b) connecting with the connection hole (70a), and the air filter (8) has, in an outer circumferential surface of the air filter (8), a plurality of air inlets (81a) through which air flows into an inner space of the air filter (8) from outside,
the plurality of air inlets (81a), in a portion of an outer circumferential surface of the air filter (8) that is farther from the chip inlet port (71a), are arranged vertically,
the chip collection case (9) is a bottomed cylinder having an attachment opening portion (9a) being open upward and attachable to the cover (7) to close a lower end opening of the cover (7), and
the suction unit (2) is configured to collect chips (M1) moving with air introduced from the chip inlet port (71a) sucked in response to rotation of the impeller (5) into the chip collection case (9).

2. The chip collection system according to claim 1, wherein
the air filter (8) contains a porous member (83) in the inner space.

3. The chip collection system according to claim 1 or claim 2, further comprising:
an attachment bracket (13) with which the suction unit (2) is attachable to an attachment body (B1),
wherein the cover (7) includes a fitting wall (73) having an outer circumferential surface having a regular polygonal shape about a centerline (C3) of the cover (7) when viewed in a direction along the centerline (C3), and
the attachment bracket (13) has a fitting hole (13a) to receive the fitting wall (73), and the fitting hole (13a) has a same regular polygonal shape as the fitting wall (73).

4. The chip collection system according to any one of claims 1 to 3, wherein
the cover (7) has, in a portion of an outer circumferential surface of the cover (7) corresponding to the centrifugal impeller (5), a plurality of outlets (7c) through which air expelled radially outward from the centrifugal impeller is discharged out of the cover (7), and the plurality of outlets (7c) are arranged along a circumference of the cover (7).

5. The chip collection system according to claim 4, wherein
the cover (7) has, in an area of the outer circumferential surface of the cover (7) excluding the plurality of outlets (7c), a plurality of recessed grooves (7e) arranged adj acent to one another and extending in a same direction and a plurality of ridges (7f) arranged adjacent to one another and extending in a same direction, and each of the plurality of ridges (7f) is located between adjacent recessed grooves of the plurality of recessed grooves (7e).

6. The chip collection system according to claim 5, wherein
the cover (7) includes a pair of split portions (7A, 7B) comprising a resin, the pair of split portions (7A, 7B) are portions of the cover halved at the centerline (C3) and having a same shape, and the cover (7) is an assembly of the pair of split portions (7A, 7B) including opening end edges abutting against each other,
the plurality of recessed grooves (7e) are recessed in a direction in which the pair of split portions (7A, 7B) are arranged,
the plurality of ridges (7f) protrude in the direction in which the pair of split portions (7A, 7B) are arranged, and
the plurality of outlets (7c) extend through the cover (7) in the direction in which the pair of split portions (7A, 7B) are arranged.

7. The chip collection system according to claim 1, wherein
the chip collection case (9) is a single member comprising a transparent resin material.

8. The chip collection system according to claim 1 or claim 2, wherein
the chip collection case (9) has, on an outer circumferential surface of the chip collection case (9), a plurality of annular grooves (9b) arranged in a direction parallel to a cylinder centerline (C4), and each of the plurality of annular grooves (9b) is recessed in an arc in a cross section taken along the cylinder centerline (C4) and extends along a circumference of the chip collection case (9) about the cylinder centerline (C4).

## Patentansprüche

1. Späneauffangsystem mit:
einem Spitzenabrichter (10), der dazu konfiguriert ist, ein distales Ende einer Elektrodenspitze (T1) zum Punktschweißen zu schneiden; und
einer Saugeinheit (2), die dazu konfiguriert ist, Späne (M1) anzusaugen und aufzufangen, die erzeugt werden, wenn das distale Ende der Elektrodenspitze (T1) mit dem Spitzenabrichter (10) geschnitten wird, wobei die Saugeinheit (2) einen drehbaren Elektromotor (6), ein durch den Elektromotor (6) drehbares Laufrad (5) zum Erzeugen einer Saugkraft, und ein Späneauffanggehäuse (9), in dem die Späne (M1) auffangbar sind, sowie eine Abdeckung (7) aufweist, die eine scheibenförmige obere Wand (7a) mit einer sich vertikal erstreckenden Mittellinie (C3) und eine zylindrische Seitenwand (7b) aufweist, die sich von einem Außenumfangsrand der oberen Wand (7a) nach unten erstreckt, wobei die Abdeckung (7) nach unten offen ist und den Elektromotor (6) und das Laufrad (5) abdeckt, wobei
das Laufrad (5) ein Zentrifugallaufrad mit einem sich in einer vertikalen Richtung erstreckenden Drehzentrum (C2) ist und eine nach unten weisende Saugöffnung (5a) aufweist, und
der Elektromotor (6) oberhalb des Laufrads (5) angeordnet ist,
die Abdeckung (7) eine Späneeinlassöffnung (71a) aufweist, durch die Luft, die die Späne (M1) enthält, von außen in einen Innenraum der Abdeckung (7) eingeleitet wird,
die Abdeckung (7) in dem Innenraum eine Trennwand (70) enthält, die den Innenraum (S1) in einen oberen Bereich, der den Elektromotor (6) und das Laufrad (5) aufnimmt, und einen unteren Bereich, der der Späneeinlassöffnung (71a) entspricht, unterteilt, und die Trennwand (70) ein Verbindungsloch (70a) aufweist, das der Saugöffnung (5a) in einer Mitte der Trennwand (70) entspricht,
ein Luftfilter (8) unterhalb der Trennwand (70) angeordnet ist, der Luftfilter (8) ein vertikal länglicher Zylinder mit Boden ist, der einen mit dem Verbindungsloch (70a) verbundenen Luftauslass (8b) aufweist, und der Luftfilter (8) in einer Außenumfangsfläche des Luftfilters (8) eine Mehrzahl von Lufteinlässen (81a) aufweist, durch die Luft von außen in einen Innenraum des Luftfilters (8) strömt,
die Mehrzahl von Lufteinlässen (81a) in einem Abschnitt einer Außenumfangsfläche des Luftfilters (8), der von der Späneeinlassöffnung (71a) weiter entfernt ist, vertikal angeordnet ist,
das Späneauffanggehäuse (9) ein Zylinder mit Boden ist, der einen nach oben offenen Befestigungsöffnungsabschnitt (9a) aufweist und an der Abdeckung (7) anbringbar ist, um eine untere Endöffnung der Abdeckung (7) zu verschließen, und
die Saugeinheit (2) dazu konfiguriert ist, Späne (M1), die sich mit von der Späneeinlassöffnung (71a) eingeleiteter Luft bewegen, die in Reaktion auf eine Drehung des Laufrads (5) angesaugt wird, in dem Späneauffanggehäuse (9) aufzufangen.

2. Späneauffangsystem nach Anspruch 1, wobei
der Luftfilter (8) in dem Innenraum ein poröses Element (83) enthält.

3. Späneauffangsystem nach Anspruch 1 oder Anspruch 2, ferner mit:
einer Befestigungshalterung (13), mit der die Saugeinheit (2) an einem Befestigungskörper (B1) anbringbar ist,
wobei die Abdeckung (7) eine Passwand (73) aufweist, die eine Außenumfangsfläche mit einer regelmäßigen polygonalen Form um eine Mittellinie (C3) der Abdeckung (7) hat, wenn sie in einer Richtung entlang der Mittellinie (C3) betrachtet wird, und
die Befestigungshalterung (13) ein Passloch (13a) zur Aufnahme der Passwand (73) aufweist, und das Passloch (13a) die gleiche regelmäßige polygonale Form wie die Passwand (73) hat.

4. Späneauffangsystem nach einem der Ansprüche 1 bis 3, wobei
die Abdeckung (7) in einem Abschnitt einer Außenumfangsfläche der Abdeckung (7), der dem Zentrifugallaufrad (5) entspricht, eine Mehrzahl von Auslässen (7c) aufweist, durch die von dem Zentrifugallaufrad radial nach außen ausgestoßene Luft aus der Abdeckung (7) abgeführt wird, und die Mehrzahl von Auslässen (7c) entlang eines Umfangs der Abdeckung (7) angeordnet ist.

5. Späneauffangsystem nach Anspruch 4, wobei
die Abdeckung (7) in einem Bereich der Außenumfangsfläche der Abdeckung (7), der die Mehrzahl von Auslässen (7c) ausschließt, eine Mehrzahl von vertieften Nuten (7e), die nebeneinander angeordnet sind und sich in einer gleichen Richtung erstrecken, und eine Mehrzahl von Rippen (7f), die nebeneinander angeordnet sind und sich in einer gleichen Richtung erstrecken, aufweist, und jede der Mehrzahl von Rippen (7f) zwischen benachbarten vertieften Nuten der Mehrzahl von vertieften Nuten (7e) angeordnet ist.

6. Späneauffangsystem nach Anspruch 5, wobei
die Abdeckung (7) ein Paar geteilter Abschnitte (7A, 7B) aufweist, die ein Harz aufweisen, wobei das Paar geteilter Abschnitte (7A, 7B) Abschnitte der Abdeckung sind, die an der Mittellinie (C3) halbiert sind und eine gleiche Form haben, und die Abdeckung (7) eine Baugruppe aus dem Paar geteilter Abschnitte (7A, 7B) ist, die Öffnungsendkanten aufweisen, die aneinander anliegen,
die Mehrzahl von vertieften Nuten (7e) in einer Richtung vertieft ist, in der das Paar geteilter Abschnitte (7A, 7B) angeordnet ist,
die Mehrzahl von Rippen (7f) in der Richtung vorsteht, in der das Paar geteilter Abschnitte (7A, 7B) angeordnet ist, und
die Mehrzahl von Auslässen (7c) sich durch die Abdeckung (7) in der Richtung erstreckt, in der das Paar geteilter Abschnitte (7A, 7B) angeordnet ist.

7. Späneauffangsystem nach Anspruch 1, wobei
das Späneauffanggehäuse (9) ein einziges Element ist, das ein transparentes Harzmaterial aufweist.

8. Späneauffangsystem nach Anspruch 1 oder Anspruch 2, wobei
das Späneauffanggehäuse (9) auf einer Außenumfangsfläche des Späneauffanggehäuses (9) eine Mehrzahl von ringförmigen Nuten (9b) aufweist, die in einer Richtung parallel zu einer Zylindermittellinie (C4) angeordnet sind, und jede der Mehrzahl von ringförmigen Nuten (9b) in einem entlang der Zylindermittellinie (C4) genommenen Querschnitt bogenförmig vertieft ist und sich entlang eines Umfangs des Späneauffanggehäuses (9) um die Zylindermittellinie (C4) erstreckt.

## Revendications

1. Système de collecte de copeaux, comprenant :
un dispositif de dressage d'embout (10) configuré pour couper une extrémité distale d'un embout d'électrode (T1) pour le soudage par points ; et
une unité d'aspiration (2) configurée pour aspirer et collecter des copeaux (M1) produits lorsque l'extrémité distale de l'embout d'électrode (T1) est coupée avec le dispositif de dressage d'embout (10), l'unité d'aspiration (2) incluant un moteur électrique (6) rotatif, une turbine (5) pouvant être entraînée en rotation par le moteur électrique (6) pour générer une force d'aspiration et un boîtier de collecte de copeaux (9) dans lequel les copeaux (M1) peuvent être collectés et un capot (7) incluant une paroi supérieure (7a) en forme de disque et présentant une ligne médiane (C3) s'étendant verticalement et une paroi latérale (7b) cylindrique et s'étendant vers le bas à partir d'un bord circonférentiel extérieur de la paroi supérieure (7a), le capot (7) étant ouvert vers le bas et recouvrant le moteur électrique (6) et la turbine (5), dans lequel
la turbine (5) est une turbine centrifuge avec un centre de rotation (C2) s'étendant dans une direction verticale et incluant un orifice d'aspiration (5a) orienté vers le bas, et
le moteur électrique (6) est situé au-dessus de la turbine (5),
le capot (7) présente un orifice d'entrée de copeaux (71a) par lequel l'air incluant les copeaux (M1) est introduit dans un espace intérieur du capot (7) depuis l'extérieur,
le capot (7) contient, dans l'espace intérieur, une cloison (70) divisant l'espace intérieur (S1) en une zone supérieure logeant le moteur électrique (6) et la turbine (5) et une zone inférieure correspondant à l'orifice d'entrée de copeaux (71a), et la cloison (70) présente un trou de raccordement (70a) correspondant à l'orifice d'aspiration (5a) au niveau d'un centre de la cloison (70),
un filtre à air (8) est situé sous la cloison (70), le filtre à air (8) est un cylindre à fond fermé allongé verticalement présentant une sortie d'air (8b) reliée au trou de raccordement (70a), et le filtre à air (8) présente, dans une surface circonférentielle extérieure du filtre à air (8), une pluralité d'entrées d'air (81a) à travers lesquelles de l'air s'écoule dans un espace intérieur du filtre à air (8) depuis l'extérieur,
la pluralité d'entrées d'air (81a), dans une partie d'une surface circonférentielle extérieure du filtre à air (8) qui est plus éloignée de l'orifice d'entrée de copeaux (71a), sont agencées verticalement,
le boîtier de collecte de copeaux (9) est un cylindre à fond fermé présentant une partie d'ouverture de fixation (9a) ouverte vers le haut et pouvant être fixée au capot (7) pour fermer une ouverture d'extrémité inférieure du capot (7), et
l'unité d'aspiration (2) est configurée pour collecter des copeaux (M1) se déplaçant avec l'air introduit depuis l'orifice d'entrée de copeaux (71a) aspiré en réponse à la rotation de la turbine (5) dans le boîtier de collecte de copeaux (9).

2. Système de collecte de copeaux selon la revendication 1, dans lequel le filtre à air (8) contient un élément poreux (83) dans l'espace intérieur.

3. Système de collecte de copeaux selon la revendication 1 ou la revendication 2, comprenant en outre :
un support de fixation (13) avec lequel l'unité d'aspiration (2) peut être fixée à un corps de fixation (B1),
dans lequel le capot (7) inclut une paroi d'ajustement (73) présentant une surface circonférentielle extérieure présentant une forme polygonale régulière autour d'une ligne médiane (C3) du capot (7) lorsqu'elle est vue dans une direction le long de la ligne médiane (C3), et
le support de fixation (13) présente un trou d'ajustement (13a) destiné à recevoir la paroi d'ajustement (73), et le trou d'ajustement (13a) présente la même forme polygonale régulière que la paroi d'ajustement (73).

4. Système de collecte de copeaux selon l'une quelconque des revendications 1 à 3, dans lequel
le capot (7) présente, dans une partie d'une surface circonférentielle extérieure du capot (7) correspondant à la turbine centrifuge (5), une pluralité de sorties (7c) par lesquelles de l'air expulsé radialement vers l'extérieur depuis la turbine centrifuge est évacué hors du capot (7), et la pluralité de sorties (7c) sont agencées le long d'une circonférence du capot (7).

5. Système de collecte de copeaux selon la revendication 4, dans lequel
le capot (7) présente, dans une zone de la surface circonférentielle extérieure du capot (7) excluant la pluralité de sorties (7c), une pluralité de rainures évidées (7e) agencées adjacentes les unes aux autres et s'étendant dans une même direction, et une pluralité de nervures (7f) agencées adjacentes les unes aux autres et s'étendant dans une même direction, et chacune de la pluralité de nervures (7f) est située entre des rainures évidées adjacentes de la pluralité de rainures évidées (7e).

6. Système de collecte de copeaux selon la revendication 5, dans lequel
le capot (7) inclut une paire de parties divisées (7A, 7B) comprenant une résine, la paire de parties divisées (7A, 7B) sont des parties du capot coupées en deux au niveau de la ligne médiane (C3) et présentant une même forme, et le capot (7) est un assemblage de la paire de parties divisées (7A, 7B) incluant des bords d'extrémité d'ouverture venant en butée les uns contre les autres,
la pluralité de rainures évidées (7e) sont évidées dans une direction dans laquelle la paire de parties divisées (7A, 7B) sont agencées,
la pluralité de nervures (7f) font saillie dans la direction dans laquelle la paire de parties divisées (7A, 7B) sont agencées, et
la pluralité de sorties (7c) s'étendent à travers le capot (7) dans la direction dans laquelle la paire de parties divisées (7A, 7B) sont agencées.

7. Système de collecte de copeaux selon la revendication 1, dans lequel
le boîtier de collecte de copeaux (9) est un élément unique comprenant un matériau en résine transparente.

8. Système de collecte de copeaux selon la revendication 1 ou la revendication 2, dans lequel
le boîtier de collecte de copeaux (9) présente, sur une surface circonférentielle extérieure du boîtier de collecte de copeaux (9), une pluralité de rainures annulaires (9b) agencées dans une direction parallèle à une ligne médiane de cylindre (C4), et chacune de la pluralité de rainures annulaires (9b) est évidée dans un arc dans une section transversale prise le long de la ligne médiane de cylindre (C4) et s'étend le long d'une circonférence du boîtier de collecte de copeaux (9) autour de la ligne médiane de cylindre (C4).
